# EUROPÄISCHE PATENTSCHRIFT

(11) **EP 1 718 409 B1**
(45) Veröffentlichungstag und Bekanntmachung des Hinweises auf die Patenterteilung: **26.12.2018**
(21) Anmeldenummer: 04790107.9
(22) Anmeldetag: 04.10.2004
(51) Int. Cl.: B01L 3/00, G02B 21/34, G01N 1/40

(54) **VORRICHTUNG FÜR MIKROFLUIDUNTERSUCHUNGEN**
DEVICE FOR MICROFLUIDIC ANALYSES
DISPOSITIF UTILISE POUR EFFECTUER DES ANALYSES MICROSCOPIQUES DE FLUIDES

(30) Priorität: 17.02.2004 DE 102004007646
(43) Veröffentlichungstag der Anmeldung: 08.11.2006
(73) Patentinhaber: ibidi GmbH, 82152 Martinsried (DE)
(72) Erfinder: KAHL, Johan-Valentin, 80636 München (DE); ZANTL, Roman, 85598 Baldham (DE)
(74) Vertreter: Grünecker Patent- und Rechtsanwälte PartG mbB
(86) Internationale Anmeldenummer: PCT/EP2004/011052
(87) Internationale Veröffentlichungsnummer: WO 2005/079985

(56) Entgegenhaltungen:
- WO-A-98/06496
- WO-A-03/041862
- WO-A1-2004/024327
- WO-A1-2004/026476
- DE-A- 10 148 210
- DE-C- 4 334 677
- DE-C- 4 443 902
- US-A- 4 756 884
- US-A1- 2003 180 711
- US-A1- 2003 198 130

## Beschreibung

Die Erfindung betrifft eine Vorrichtung für Mikrofluiduntersuchungen mit einem Substrat mit planer Grundfläche und Deckfläche, insbesondere zum Mikroskopieren von Zellen sowie zur Molekülanalyse.

Mikroskopische Untersuchungen von Zellen (Bakterien) oder Molekülen werden herkömmlicherweise auf Objektträgern, Deckgläsern, Petrischalen, Multititerplatten oder in Zellkulturflaschen durchgeführt. Aus dem Stand der Technik sind weiterhin Trägersysteme mit Flüssigkeitsaufnahmen wie Reservoire oder Kanäle bekannt. Solche Trägersysteme sind beispielsweise in der DE 43 34 677 oder in der DE 201 16 019 offenbart. Dabei handelt es sich um zusammengeklebte Glassysteme oder Kunststoffkammern in Form eines Kanals, welche der optischen Mikroskopie zugänglich sind.

Diese Trägersysteme haben jedoch den Nachteil, dass nach Einfüllen einer Lösung mit den zu mikroskopierenden Partikeln, mit Ausnahme von Hinzufügen von Lösungen, keine Experimente, wie die Selektion bestimmter Partikel oder Migrationstudien, mehr durchgeführt werden können. Solche Experimente müssen vor Befüllen des Trägersystems durchgeführt werden, was zum einen die gesamte Untersuchungsdauer verlängert und zum anderen die Gefahr eines Verunreinigens auf Grund des Umfüllens zur Folge hat.

Aus der US 2003/0198130 ist ein fluidischer Mischer in einem Mikrofluidsystem bekannt. Die US 2003/0180711 zeigt eine dreidimensionale Mikrofluidvorrichtung mit einer porösen Membran. Eine Vorrichtung zur Preparation von Partikeln für die Analyse ist aus der WO 03/041862 bekannt.

Die der Erfindung zu Grunde liegende Aufgabe besteht daher darin, eine Vorrichtung für Mikrofluiduntersuchungen bereitzustellen, mit der Partikelversuche, wie Selektion bestimmter Partikel oder Migrationsversuche, und ein anschließendes Mikroskopieren in einfacher und genauer Weise durchgeführt werden können.

Diese Aufgabe wird gelöst durch den Gegenstand von Anspruch 1. Erfindungsgemäß wird also eine Vorrichtung für Mikrofluiduntersuchungen mit einem Substrat mit planer Grundfläche und Deckfläche bereitgestellt, wobei in das Substrat eine Kammer zur Flüssigkeitsaufnahme mit wenigstens zwei Zuführungen integriert ist und in der Kammer eine halb durchlässige oder durchlässige Membran angeordnet ist, wobei die
Kammer durch die Membran in zwei Teilkammern mit jeweils wenigstens einer Zuführung unterteilt wird.

Unter einer halbdurchlässigen Membran wird eine Membran verstanden, die nur von einer Seite durchlässig und/oder teilchenselektiv durchlässig ist.

In die erfindungsgemäße Vorrichtung können zunächst Teilchen in Lösung gefüllt werden, dann Untersuchungen mit Hilfe der Membran (beispielsweise Filter-, Dialyse- und/oder Migrationsuntersuchungen) und anschließend direkt mikroskopische Analysen durchgeführt werden.

Bei Filteruntersuchungen kann eine durchlässige oder poröse Membran vorgesehen sein, deren Pore oder Poren kleiner als die zu filternden Partikel (beispielsweise Bakterien) sind, so dass diese nicht durch die Membran gelassen werden. Für Dialyseuntersuchungen kann vorzugsweise eine halbdurchlässige (semipermeable) Membran vorgesehen sein, die beispielsweise für Zellen undurchlässig aber für Biomoleküle wie Proteine oder Salze durchlässig ist. Eine Teilkammer kann dann zur Kultivierung und Mikroskopie der Zellen bzw. Bakterien dienen. Weiterhin kann die erfindungsgemäße Vorrichtung für Migrationstudien, insbesondere Chemotaxis-Untersuchungen, verwendet werden, wobei zwischen horizontaler Chemotaxis (d. h., parallel zur durchlässigen Membran) und vertikaler Chemotaxis (d. h. senkrecht zur Membran) unterschieden wird.

Gemäß einer vorteilhaften Weiterbildung können die Teilkammern wenigstens teilweise parallel zueinander angeordnet sein. Dies kann durch eine geeignet ausgebildete Kammer und/oder eine geeignet angeordnete Membran erreicht werden. Durch einen parallelen Verlauf der Teilkammern wird eine große Grenzfläche zwischen den Teilkammern erhalten, wodurch der Teilchenaustausch beschleunigt durchgeführt werden kann.

Vorzugsweise können die Teilkammern in einer Ebene parallel oder senkrecht zur Grundfläche des Substrats angeordnet sein.

Gemäß einer vorteilhaften Weiterbildung kann die Membran wenigstens teilweise in einer Ebene parallel oder senkrecht zur Grundfläche des Substrats angeordnet sein. Damit sind dann die resultierenden Teilkammern wenigstens teilweise in einer Ebene senkrecht oder parallel zur Grundfläche des Substrats angeordnet, wobei diese Anordnung insbesondere je nach gewünschter Anwendung gewählt werden kann. Eine Anordnung von Teilkammern übereinander (Membran parallel zur Grundfläche) kann vorteilhaft sein, wenn beispielsweise eine Gravitationswirkung auf die Teilchen in Richtung der Membran gewünscht ist. Bei einer Anordnung der Teilkammern nebeneinander (Membran senkrecht zur Grundfläche) sind insbesondere beide Teilkammern in gleicher Weise einfach mit dem Mikroskop zugänglich.

Vorteilhafterweise kann die Membran flexibel, vorzugsweise elastisch, sein. Bei einer flexiblen (biegsamen) Membran lässt sich die Form der Teilkammern verändern; eine elastische Membran erlaubt durch Beaufschlagen der Membran mit Druck ein reversibles Verändern des Volumens der Teilkammern.

In einer vorteilhaften Weiterbildung kann die erste der beiden Teilkammern ein Gitter umfassen. Dabei kann das Gitter als mechanische Referenz dazu dienen, die zu detektierenden Partikel in einer Fokus-Ebene zu halten.

Weiter kann die Membran bei einem Fluidstrom von der zweiten in die erste Teilkammer teilweise oder vollständig an das Gitter gedrückt werden. In einem Fluidstrom werden Partikel in einer Flüssigkeit oder einem Gas transportiert. Das Gitter dient zusätzlich dazu, dass die Membran in dem Fluidstrom plan bleibt, nicht verrutscht oder nicht reißt. Dabei ist es möglich, dass zwischen Gitter und Membran ein dünner Fluidfilm übrig bleibt, eventuell auch, wenn man nach dem Fluidstrom Luft nachpresst, so dass der Fluidfilm die Membran und das Gitter zusammenhält. Die Maschenweite des Gitters, bzw. der Durchmesser der Bohrungen wird bevorzugt so gewählt, dass die Membran beim Filtervorgang nicht tiefer als die Fokustiefe des Auslesegerätes in die Maschen bzw. Löcher hineingedrückt wird.

Die Oberfläche der als Filter funktionierenden Membran kann durchgehend glatt, zumindest teilweise gelöchert und/oder zumindest teilweise permeabel sein.

Weiter kann die Membran fest zwischen erster und zweiter Teilkammer vorgesehen sein.

Dies kann dadurch ermöglicht werden, dass die Membran unter Spannung eingeklebt wird. Allerdings kann dabei das Problem auftreten, dass bei Verwendung von stark aushärtenden Klebern die Filtermembran reißt. Insbesondere sobald die Membran mit Lösungsmitteln in Verbindung kommt, die sie selbst oder die umgebenden Strukturen quellen oder schrumpfen lassen. Dieses Problem kann dadurch gelöst werden, dass man zur festen, also verklebten, Halterung elastische Polymere mit geringen Shorehärten, z.B. unter 60, verwendet, wie z.B. Silikon. Dazu kann man vorzugsweise in eine Nut eine Wurst aus Silikon verlegen, auf die dann der Rand der Membran aufgepresst wird. Alternativ kann man auch weiche Polymerstrukturen verwenden, um die Membran so einzuklemmen, dass sie sich bei dem Einklemmvorgang zumindest teilweise strafft.

Außerdem kann die Gefahr des Einreißens der Membran reduziert werden, indem man auch in diesem Fall die Membran während des Filtervorgangs, wenn das Fluid von der zweiten Teilkammer zur ersten Teilkammer durch die Membran Richtung Gitter strömt, auf dem Gitter aufliegen lässt. Dabei hat das Gitter ohne Anlegen des Fluiddruckes einen kleinen definierten Abstand zur Membran.

Alternativ ist es möglich, die Membran lose zwischen erster und zweiter Teilkammer anzuordnen.

Dabei kann es vorteilhaft sein, ein Mittel vorzusehen, das die Membran so positioniert, dass sie teilweise oder vollständig in dem Fluidstrom liegt. Der Fluidstrom kann dabei nahezu senkrecht auf die Membran treffen, bevor diese an das Gitter gedrückt wird.

Das Mittel zum Positionieren der Membran soll sicherstellen, dass das Fluid, das aus der Zuführung der zweiten Teilkammer in die erste Teilkammer strömt, unter die Membran (d.h. von der Grundfläche der zweiten Teilkammer aus) gelangt und diese dadurch gegen das Gitter drückt.

Dies kann z.B. durch eine Nut gewährleistet werden, die sich zwischen der Zuführung der zweiten Teilkammer und dem Gitter befindet und in der die Ränder der Membran zumindest teilweise gelagert sind. Alternativ kann dies auch durch eine Kerbe, eine Ausbuchtung o.ä. realisiert werden.

In einer weiteren vorteilhaften Ausbildung kann die Membran so angeordnet sein, dass sie durch eine Kraft, z.B. bei einem Fluidstrom von der ersten in die zweite Teilkammer, teilweise oder vollständig gegen die Grundfläche des Substrats/der zweiten Teilkammer gedrückt wird. Dabei kann die Grundfläche aus einer Folie, bevorzugt einer Kunststofffolie, bestehen.

Dies kann z.B. dann geschehen, wenn die Membran durch einen Fluidstrom aus der zweiten Kammer mit den zu detektierenden Partikeln an das Gitter gedrückt wird und dann die filternde Membran durch einen kurzen Rückfluss (Flüssigkeitsstrom, kurzer Gasstoß o.ä.) aus der Zuführung der ersten Teilkammer durch das Gitter Richtung zweite Teilkammer an die Grundfläche der zweiten Teilkammer gedrückt wird. Zuerst beult sich die Membran mit dem Rückflussdruck Richtung Grundfläche, berührt gegebenenfalls diese teilweise (in der Membranmitte), da sie an ihren Rändern z.B. in der Nut noch fest steckt. Bei weiterem Druck durch den Rückfluss lösen sich auch die Ränder aus der Nut, und die Membran legt sich vollständig (auch mit ihren Rändern) an die plane Grundfläche an. Generell kann auch hier ein dünner Fluidfilm zwischen Membran und Grundfläche übrig bleiben.

Alternativ können statt des strömenden Fluids auch magnetische Kräfte oder ein Stempel die Membran an die Grundfläche drücken.

Diese Vorrichtung hat den Vorteil, dass die von der Membran gefilterten Partikel zwischen Grundfläche (vorzugsweise eine Kunststofffolie) und Membran annähernd unbeweglich eingeschlossen, also durch normale mechanische Beanspruchung nicht mehr zu entfernen sind. Weiter kann ein Auslesegerät die Grundfläche als Referenz, d.h. als Abstandhalter zur Membran, verwenden. Der voreingestellte Fokus würde sich in diesem Fall nur nach der Dicke der Grundfläche richten.

Üblicherweise können bei stark leuchtenden Partikeln (z.B. Fluoreszenz Beads) Objektive mit numerischen Aperturen von unter 0,5 verwendet werden bzw. optische Apparaturen mit ähnlichen Charakteristika. Damit liegt die Schärfentiefe im Bereich von ca. 10 - 200 µm. Bei schwach leuchtenden Partikeln werden typischerweise Objektive mit numerischen Aperturen bis 1,4 verwendet. Damit lassen sich Schichtdicken von bis zu 0,5 - 10 µm scharf abbilden. Damit ist zusätzlich die notwendige Glattheit der Membran definiert, da sämtliche zu detektierenden Objekte in diesem Fokusbereich liegen sollten.

In einer vorteilhaften Weiterbildung kann die Membran wenigstens teilweise mit dem Boden der Kammer verbunden sein. Beispielsweise kann die Membran verklebt oder mittels Ultraschall-Bonden verbunden sein.

Weiter können Positioniereinrichtungen in dem Substrat vorgesehen sein, die die Membran beim Einbau fixieren sollen.

Vorzugsweise kann wenigstens ein Teil der Membran an einer Kammerwand, insbesondere dem Boden der Kammer, flächig anliegend lösbar angeordnet sein. Wenn die Membran an einer Kammerwand anliegt, ist sie durch diese Wand in einfacher Weise und direkt mikroskopisch zugänglich. Beispielsweise kann die Membran bei einer Untersuchung zunächst an einer Wand anliegen; dann wird eine Flüssigkeit mit zu untersuchenden Partikeln zwischen die Wand und die Membran gebracht, wodurch sich die Membran von der Wand löst. Ein Teil der Flüssigkeit und/oder der Partikel geht durch die Membran hindurch während ein anderer Teil an der Membran, beispielsweise in den Poren, hängen bleibt. Sobald der Druck durch die Flüssigkeit auf die Membran nachlässt, legt sich diese wieder, auf Grund ihrer Anordnung und/oder Elastizität, an die Wand der Kammer, so dass ihre Oberfläche mit den daran angeordneten Partikeln mikroskopisch untersucht werden kann.

Gemäß einer Weiterbildung der zuvor beschriebenen Vorrichtungen kann die Membran wenigstens eine Pore aufweisen, wobei jede Pore einen Porendurchmesser in einem vorbestimmten Teilbereich des Bereichs von 1 nm bis 20 µm, vorzugsweise 0,5 µm bis 20 µm, aufweisen kann. Der Teilbereich kann insbesondere auch den gesamten genannten Bereich oder nur einen bestimmten Wert aus dem Bereich umfassen. Je nach Durchmesser oder Durchmesserverteilung der Poren kann die Teilchenselektivität der Membran und/oder der Fluss durch die Membran kontrolliert werden.

Die Poren können in einer besonderen Ausführung in einem regelmäßigen Abstand voneinander angeordnet sein. Der Porenabstand kann zwischen 5 µm und 2 cm betragen. Die Porenmuster können in einer bevorzugten Ausführung alle bekannten zweidimensionalen Kristallanordnungen darstellen. Die Anzahl der Poren in einem Untersuchungsreservoir können bis zu 50.000 betragen. Die Untersuchungsreservoire können typischerweise eine Größe zwischen 5µm² und 5 cm² aufweisen. In einer bevorzugten Ausführung sind zwischen einem und 8192 Reservoire auf einem Träger untergebracht.

Dabei können die Poren ein regelmäßiges Muster bilden. In einem typischen Experiment werden chemotaktisch aktivierbare Zellen auf die Membran mit den regelmäßig angeordneten Poren gegeben und verteilen sich dort, solange keine Chemotaxine durch die Poren diffundieren und mit den Zellen in Kontakt kommen, gleichmäßig auf der Membranoberfläche.

Diffundieren Chemotaxine durch die Pore, beginnen die Zellen sich in Richtung der nächsten zu ihnen gelegenen Pore zu bewegen. Nach einer bestimmten Zeit, haben sich dann alle Zellen an den jeweiligen Poren gesammelt.

Den Unterschied zwischen der Gleichverteilung der Zellen vor Einwirkung der Chemotaxine und der Anlagerung der Zellen um die Poren nach Zugabe der Chemotaxine kann mittels Fourieanalyse quantifiziert werden. Die Gleichverteilung der Zellen erscheint im Fourierraum als Gerade. Die periodische Anordnung der Zellen um die Pore erscheint als 'deltaähnliche' Funktion am Wert im Fourieraum, der dem Porenabstand entspricht. Diese Methode ist besonders dann sinnvoll, wenn durch alle Poren das identische Chemotaxin mit der identischen Konzentration diffundiert. Insbesondere kann eine quantitative und zeitaufgelöste Aussage über die Zellbewegung getroffen werden, wenn der Übergang von der Geraden zu der Deltafunktion als Funktion der Zeit analysiert wird. Durch diese Methode ist ebenfalls eine einfache und schnelle Mittelung über das Verhalten vieler Zellen gegeben (Verbesserung der Statistik). In einer Weiterbildung können die optisch sichtbaren Poren als Maßstab im Fourierraum verwendet werden.

In einer anderen Weiterbildung können durch die Poren verschiedene Chemotaxine diffundieren, so dass ein direkter Vergleich der Wirksamkeit dargestellt werden kann. Auch können identische Chemotaxine in unterschiedlichen Konzentrationen verwendet werden, um eine genauere Analyse der Wanderungsgeschwindigkeit nachzuweisen.

In einer anderen Weiterbildung können verschiedene Porenarrays in verschiedenen Reservoiren untergebracht werden.

Wenn die Reservoirs als Kanal ausgebildet sind, kann die Flüssigkeit in diesem Kanal eingespannt werden. Durch die Oberflächenspannung der Flüssigkeit bewegt sich dann die Flüssigkeit nicht aus dem Kanal heraus, auch wenn der Kanal geschwenkt wird. Dazu füllt die Flüssigkeit den Kanal vollständig bis zur den jeweiligen Ausgangsöffnungen Der Kanal hat Typischerweise eine Höhe zwischen 10 µm und 1 cm und eine Breit zwischen 10 µm und 5cm. Die Länge kann zwischen 100 µm und 30 cm Betragen.

In einer Weiterentwicklung können die Porenmuster alle bekannten zweidimensionalen Kristallanordnungen darstellen. Die Anzahl der Poren in einem Untersuchungsreservoir können liegt zwischen mindestens zwei und kann bis zu 50.000 betragen. Die Untersuchungsreservoire können typischerweise ein Größe zwischen 5µm² und 5 cm² aufweisen. In einer bevorzugten Ausführung sind zwischen einem und 8192 Reservoire auf einem Träger untergebracht.

Die Poren können auch unregelmäßige Muster bilden. Zur Analyse der Zellverteilung als Funktion der Zeit und somit der Zellbewegung kann die Korrelationsfunktion zwischen den Bild der Löcher und dem Bild der 'chemotaxierten' Zellen verwendet werden. Die Löcher können z.B. durch Neutronenbeschuß und anschließenden ätzen erzeugt werden.

Die Membran der zuvor genannten Vorrichtungen kann vorzugsweise ein optisch hochwertiges Material umfassen. Mit einem optisch hochwertigen Material (d. h. ohne Doppelbrechung oder Autofluoreszenz oder mit einer Autofluoreszenz oder Doppelbrechung, die gleich oder geringer als die von COC oder COP ist) lassen sich in verbesserter Weise optische Untersuchungen, insbesondere auf beiden Seiten der Membran durchführen.

Gemäß einer vorteilhaften Weiterbildung kann die Kammer wenigstens vier Zuführungen umfassen und durch die Membran in zwei Teilkammern mit jeweils wenigstens zwei Zuführungen unterteilt werden. Damit ist jede Teilkammer unabhängig von der anderen fluidisch adressierbar, d. h. jede der Kammern weist eine eigene Zufluss- und Abflussöffnung auf.

Weiter kann wenigstens eine der Zuführungen ringförmig um die Kammer verlaufen, um ein gleichmäßiges Befüllen der Kammer zu gewährleisten.

Vorteilhafterweise kann die Membran und/oder eine Kammerwand eine Oberflächenfunktionalisierung aufweisen. Damit können in einzelnen Bereichen bestimmte Vorgänge, wie Zellwachstum oder Adhäsion von Partikeln, begünstigt werden. Unterschiedliche Bereiche der Membran oder der Kammerwand können unterschiedliche Oberflächenfunktionalisierungen aufweisen.

Vorzugsweise kann die Oberflächenfunktionalisierung eine Beschichtung, insbesondere mit wenigstens einem Polyelektrolytenfilm, einem Adhäsionsfaktor, einer funktionellen Gruppe, einer Lipidmembran, einem Zellrasen und/oder einem Blockingmolekül, umfassen.

Die Polyelektrolytfilme können PAA (Polyacrylsäure), PEI (Polyethylendiimid) und/oder PSS (Polystyrolsulfonsäure) umfassen; die Biomoleküle können Proteine oder DNA und die Adhäsionsfaktoren können RGD-Peptide umfassen. Die funktionelle Gruppe kann COOH oder NH₂ und das Blockingmolekül kann BSA, Gelatine oder DNA umfassen.

Das Substrat der zuvor beschriebenen Vorrichtungen umfasst einen Kunststoff, insbesondere einen optisch hochwertigen und/oder einen optisch nicht transparenten Kunststoff. Ein optisch hochwertiger (d. h. ohne Doppelbrechung oder Autofluoreszenz) Kunststoff reduziert störende Einflüsse des Substrats beispielsweise bei Fluoreszenz-Untersuchungen; durch die Verwendung eines optisch nicht transparenten Materials können Störungen auf Grund von außen einfallendem, unerwünschtem Licht vermieden werden.

Das Substrat umfasst ein Deckenelement, in dessen Grundfläche eine Ausnehmung für die Kammer vorgesehen ist. Insbesondere kann die Ausnehmung in Form eines Grabens ausgebildet sein. Dies ermöglicht eine einfache Herstellung des Substrats.
Das Deckenelement kann eine Deckplatte sein. Das Deckenelement ist in diesem Fall ein Stück und lässt sich einfach herstellen.
Alternativ kann das Deckenelement eine Zwischenplatte, in welcher ein Durchbruch für die Kammer vorgesehen ist, und eine Abdeckplatte, welche zum Abdecken des Durchbruchs auf einer Seite der Zwischenplatte vorgesehen ist, umfassen. In diesem Fall umfasst also das Deckenelement zwei Platten, nämlich eine Zwischenplatte und eine Abdeckplatte. Dabei kann die Abdeckplatte auf der der Zwischenplatte zugewandten Seite eine Aufnehmung aufweisen. Damit wird dann die Form der Kammer durch die Ausnehmung in der Abdeckplatte und die Form des Durchbruchs bestimmt. Alternativ kann die Abdeckplatte keine Ausnehmung aufweisen, so dass die gesamte Ausnehmung des Deckenelements durch den Durchbruch bestimmt wird.
Die Zwischenplatte kann eine Kunststofffolie, insbesondere mit einer Dicke von 1µm - 1mm, sein.
Vorzugsweise kann die Membran zwischen der Abdeckplatte und der Zwischenplatte angeordnet sein. Auf diese Weise lässt sich die Membran insbesondere einfach mit dem Substrat verbinden, indem sie beispielsweise zwischen die Abdeckplatte und die Zwischenplatte geklemmt wird und/oder mit wenigstens einer dieser beiden (Teil-) Platten durch Kleben, Ultraschallbonden oder Ähnlichem verbunden wird. Wenn die Abdeckplatte selbst noch eine Aufnehmung aufweist, wird somit eine Teilkammer durch die Aufnehmung in der Abdeckplatte gebildet und von der anderen Teilkammer, die durch den Durchbruch in der Zwischenplatte gebildet wird, mittels der Membran (Zwischenwand) getrennt.

Das Substrat umfasst ein Abdeckelement zum Abdecken der Ausnehmung. Dieses bildet die verbleibende Wand der Kammer, die durch die Ausnehmung, ob mit oder ohne Zwischenplatte, gebildet wird.

Das Abdeckelement ist eine Kunststofffolie, insbesondere aus einem optisch hochwertigen Kunststoff und hat eine Dicke von 50 µm bis 1 mm. Zum einen lässt sich eine Kunststofffolie einfach mit dem Deckenelement verbinden und zum anderen lassen sich durch Verwendung einer Folie sehr geringe Dicken des Abdeckelements erzielen, was die Qualität von Mikroskopanalysen verbessert.

Die Zuführungen münden in die Deckfläche des Deckenelements. Damit ist die Kammer bzw. sind die Teilkammern bezüglich der Flüssigkeitszugabe jeweils von oben zugänglich.
Bei der erfindungsgemäßen Vorrichtung ist wenigstens ein Flüssigkeitsreservoir vorgesehen, welches auf dem Deckenelement des Substrats angeordnet ist und in welches eine Zuführung mündet. Ein solches Flüssigkeitsreservoir kann dazu dienen, größere Flüssigkeitsmengen an die Kammer abzugeben oder kann als Überlaufbecken fungieren, wenn es an der Mündung der Abflusszuführung angeordnet ist.
Das wenigstens eine Flüssigkeitsreservoir ist aus dem selben Kunststoff wie das Deckenelement im Bereich der Zuführungsmündung. Das Flüssigkeitsreservoir und das Deckenelement sind im Bereich der Zuführungsmündung als ein Stück ausgebildet. Dies bedeutet, dass das Reservoir nicht mit dem Deckenelement beispielsweise verklebt oder verschraubt ist. Auf diese Weise lassen sich Dichtungen zwischen dem Reservoir und dem Deckenelement vermeiden und die Gefahr von Kontamination wird verringert.

Vorzugsweise kann das eine Stück ein Spritzgussteil sein. Dies erlaubt eine einfache Herstellung des Substrats.

Vorzugsweise kann das Substrat in einem Objektträger- oder Multititerformat ausgebildet sein.

Alle zuvor beschriebenen Vorrichtungen können dahingehend weiter gebildet werden, dass die Grund- und/oder Deckelfläche und/oder Membran aus einem optisch hochwertigen Material besteht, welches eine so geringe oder eine geringere Autofluoreszenz aufweist als COC (cyclische Olefin Copolymere) oder COP (cyclische Olefin Polymere).

Vorzugsweise können die Deckfläche und/oder Grundfläche auch aus jeweils einer Kunststofffolie bestehen.

Dabei kann die Grund- oder Deckelfläche auch aus einem optisch hochwertigen Material bestehen. Optisch hochwertig heißt, dass die Grundfläche optisch transparent ist oder eine Autofluoreszenz gleich oder geringer als die von COC oder COP aufweist oder keine Doppelbrechung hat oder im UV Licht transparent ist.

Um die Autofluoreszenz zu bestimmen, wurde mit dem Axivert S 100 von Zeiss, der HBO 50 Lampe und dem 40 X Plan Neofluar Objektiv von Zeiss (NA 0,75), sowie dem Filtersatz 09 von Zeiss (Anregung 450-490 nm, Emission 515-565 nm) in einem abgedunkelten Raum bei Raumtemperatur gemessen. Alle relevanten Einstellungen, insbesondere die Einstellungen an der HBO Lampe, sowie die Stellung der Leuchtfeldblende, wurden während der Messung nicht verändert.

Der Meßbereich betrug 219 x 173 µm. Mit der Software IPLab (Scanalytics) wurde bei einem 2x2 Binning 500ms belichtet und ein Offset von 200 bei der 5 MHz MicroMax Kamera von Princeton Instruments (Austin/Texas) eingestellt.

Es wurden Materialien mit einer Dicke zwischen 150 µm und 200 µm verwendet und in die Mitte des Präparates fokussiert.

Bei dieser Einstellung wurde bei Glas (Menzel-Gläser 25 x 75 mm) mit einer Dicke von 170µm ± 5µm ein mittlerer Pixelwert von 64 ± 3 bestimmt.

Die Foliendicke bei dem verwendeten COC betrug 190µm ± 5 µm, und es wurde ein mittlerer Pixelwert von 97 ± 5 bestimmt. Bei dem verwendeten COP betrug die Foliendicke ebenfalls 190 ± 5µm, und es wurde ein mittlerer Pixelwert von 107 ± 6 bestimmt. Unter diesen Bedingungen, insbesondere bei den verwendeten Filtern, sind alle Werte mit einer Autofluoreszenz kleiner als 120 als 'geringe Autofluoreszenz' zu bewerten.

Bei der Verwendung von Filtersätzen ab einer Anregungswellenlänge von 529 nm wurden mit diesem Aufbau keine signifikanten Unterschiede zwischen Glas, COC und COP bestimmt.

Weitere Merkmale und Vorteile der Erfindung werden nachfolgend anhand der Beispiele und Figuren beschrieben:
- Figur 1: zeigt eine Explosionsansicht einer Vorrichtung für Mikrofluiduntersuchungen mit einem Substrat mit einer Deckplatte und einer Zwischenplatte;
- Figur 2a, 2b: illustriert ein Beispiel einer Vorrichtung für Chemotaxis;
- Figur 3a: zeigt eine Explosionsansicht einer Vorrichtung für Mikrofluiduntersuchungen mit einer Deckplatte und einer am Boden der Kammer flächig anliegend lösbaren geordneten Membran;
- Figur 3b: zeigt eine Querschnittsansicht der Vorrichtung aus Figur 3a;
- Figur 3c: illustriert ein Verfahren mit der Vorrichtung nach den Figuren 3a und 3b;
- Figur 4a-d: zeigt eine Explosionsansicht einer Vorrichtung für Mikrofluiduntersuchungen mit einem Gitter und den Einbau der Membran;
- Figur 5a: zeigt eine Seitenansicht der Vorrichtung in Figur 4;
- Figur 5b: illustriert in einer Seitenansicht der Vorrichtung in Figur 4 den Fluidstrom aus der zweiten Teilkammer in Richtung der ersten Teilkammer;
- Figur 5c: zeigt in einer Seitenansicht der Vorrichtung in Figur 4 den Rückfluss eines Fluids aus der ersten Teilkammer in Richtung der zweiten Teilkammer;
- Figur 5d: zeigt in einer Seitenansicht der Vorrichtung in Figur 4 die Membran nach dem Rückfluss plan an der Grundfläche der zweiten Teilkammer anliegend.

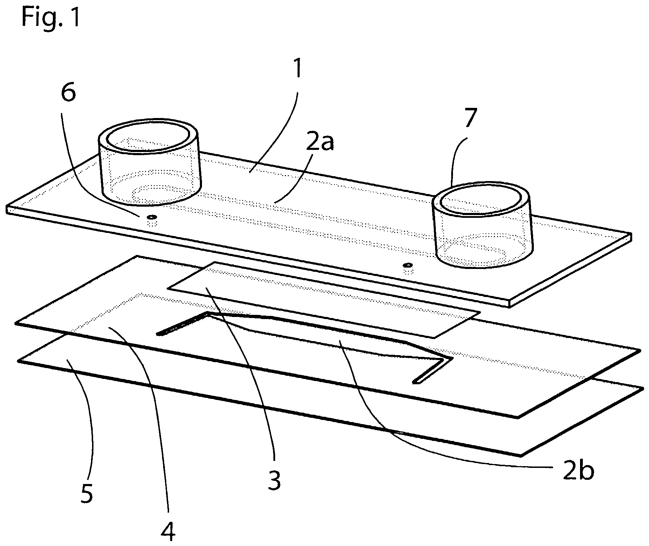

In Figur 1 ist eine Vorrichtung für Mikrofluiduntersuchungen in einer Explosionsansicht gezeigt. Die Vorrichtung umfasst ein Substrat, welches wiederum ein Deckenelement mit einer Abdeckplatte 1 und einer Zwischenplatte 4 umfasst. In der Grundfläche der Abdeckplatte ist eine Ausnehmung 2a vorgesehen, deren Zuführungen (nicht gezeigt) jeweils in ein Flüssigkeitsreservoir 7 münden. Die Zwischenplatte 4 weist einen Durchbruch 2b auf. Dieser Durchbruch ist so ausgebildet, dass er einerseits unter der Ausnehmung 2a der Abdeckplatte liegt und andererseits Zuführungen aufweist, die bei den Öffnungen 6 in die Deckfläche des Abdeckelements 1 münden.

Weiterhin umfasst das Substrat ein Abdeckelement 5, welches insbesondere als Folie ausgebildet sein kann. Auch die Zwischenplatte 4 kann als Kunststofffolie ausgebildet sein. In Figur 1 ist eine Membran 3 zwischen der Abdeckplatte 1 und der Zwischenplatte 4 angeordnet, so dass nach Zusammenfügen und Verbinden der Abdeckplatte 1, der Zwischenplatte 4 und des Abdeckelements 5 zwei Teilkammern entstehen, welche durch die Membran 3 getrennt werden. Die beiden Teilkammern werden dabei jeweils durch die Ausnehmung 2a bzw. den Durchbruch 2b und die dazwischen angeordnete Membran 3 gebildet, so dass im Folgenden auch die Teilkammern mit 2a bzw. 2b bezeichnet werden.

Die Membran kann dabei einfach zwischen die Abdeckplatte 1 und die Zwischenplatte 4 geklemmt sein oder mit einer dieser oder beiden Platten verbunden sein, beispielsweise durch Kleben oder Ultraschallbonden.

Es können beispielsweise z.B. Cyclopor Track Etched Membranen von Whatman oder Filtermembranen von Millipore verwendet werden.

Die resultierende Vorrichtung für Mikrofluiduntersuchungen weist also eine Kammer auf, gebildet durch die Ausnehmungen 2a und dem Durchbruch 2b, die durch die Membran 3 in zwei Teilkammern in Form von Kanälen unterteilt wird. Jede der beiden Teilkammern weist eigene Zufluss- und Abflusszuführungen auf.

Die erfindungsgemäße Vorrichtung und insbesondere die in Figur 1 gezeigte Vorrichtung können insbesondere für Dialyseexperimente verwendet werden. Im Falle der in Figur 1 gezeigten Vorrichtung wäre die Teilkammer 2a der Dialysekanal und die Teilkammer 2b der Beobachtungskanal, die durch eine semipermeable Membran 3 voneinander getrennt sind. Der untere Beobachtungskanal 2b kann beispielsweise mit Suspensionskultur über eine der Öffnungen 6 und der obere Kanal 2a über die Reservoire 7 befüllt werden. Die Membran ist dann so gewählt, dass sie für Zellen undurchlässig aber für Biomoleküle wie z. B. Proteine und Salze durchlässig ist.

Durch die gezeigte Anordnung kann der Austausch durch die semipermeable Membran durch Diffusion oder Konvektion dominiert sein. Je größer die Kontaktfläche zwischen den beiden Teilkammern ist, desto schneller findet der Austausch statt.

Alternativ zu der gezeigten Ausführungsform, bei der die beiden Teilkammern parallel zueinander verlaufen und in einer Ebene senkrecht zur Grundfläche liegen, können die Teilkammern auch nebeneinander in einer Ebene parallel zur Grundfläche angeordnet sein.

In einer möglichen Anwendung werden adhärente Zellen in Kontakt mit einer Oberfläche (Wand) gebracht, an die Zellen durch spezifische Wechselwirkung an bestimmten Bindungsstellen adhärieren. Durch die Dialysemembran 3 wird eine Lösung gespült, die eine vorbestimmte Konzentration von Antikörpern hat. Die Antikörper sind so gewählt, dass sie spezifisch an die Bindungsstellen der Zellen binden. Die Antikörper konkurrieren mit den extrazellularen Bindungsmolekülen der Zellen um die auf einer Wand immobilisierten Bindungsstellen, was bei einer ausreichenden Antikörperkonzentration zu einem Ablösen der Zellen führt. Im Gegensatz zu herkömmlichen Zellkulturgefäßen bzw. Mikroskopieträgern kann man nun die Antikörper über die Dialysemembran so weit verdünnen, dass die Zellen wieder die Möglichkeit besitzen, an der Oberfläche zu adhärieren. Damit lässt sich beispielsweise die Reversibilität von Bindungen von Zellen untereinander anhand von Zell-Substrat-Wechselwirkungen studieren.

In einer weiteren Anwendung können Zellen in Suspensionskulturen untersucht werden. Zellen in Suspensionskultur werden im Allgemeinen durch Zentrifugieren, anschließende Abnahme des Überstandes und Re-Suspension von Inhaltsstoffen des Puffers bzw. der Nährlösung in gereinigter Form erhalten. Für eine wirksame Reinigung ist es häufig nötig, diese Arbeitsschritte mehrmals zu wiederholen.

Durch die Verwendung der gezeigten Vorrichtung ist es möglich, Zellen in Suspensionskultur mit bestimmten Stoffen in Verbindung zu bringen oder das Zellmedium von diesen zu befreien. Beispielsweise können Zellen in Suspensionskultur in dem Beobachtungskanal 2b mit Stoffen versorgt werden, die durch eine im Dialysekanal 2a wachsende Zellkultur produziert werden, wobei die beiden Zellkulturen nicht miteinander vermischt werden. Diese Technik kann beispielsweise verwendet werden, wenn schlecht wachsende Zellen die Stoffe von sog. Fütterzellen benötigen, um besser *in vitro* kultiviert werden zu können. Die Fütterzellen können durch die unabhängige Fluidansteuerung beider Teilkammern jederzeit entfernt und wieder hinzugefügt werden, um etwa Kreuzreaktionen mit dem eigentlichen Experiment zu vermindern.

In einer weiteren Anwendung kann die in Figur 1 gezeigte Vorrichtung verwendet werden, um ein Modellsystem für Sepsis zu bilden. Dabei wird eine humane Zellkultur im Beobachtungskanal und eine Bakterienkultur im Dialysekanal 2a gezüchtet. Die humanen Zellen werden durch die Bakterien vergiftet. Mit der gezeigten Vorrichtung lässt sich untersuchen, mit welchen Medikamenten man bei bestimmter Bakteriendichte die humanen Zellen am Leben erhalten kann.

Zusätzlich zu den genannten Anwendungen kann die Membran in einer solchen Vorrichtung für Migrationsstudien, insbesondere für Chemotaxis-Untersuchungen, verwendet werden. Bei der Chemotaxis bewegen sich Zellen in einem chemischen Konzentrationsgradienten. Dabei kann zwischen horizontaler Chemotaxis (parallel zur Membran) und vertikaler Chemotaxis (senkrecht zur Membran) unterschieden werden.

Bei der horizontalen Chemotaxis werden in eine Teilkammer Zellen eingebracht, die auf der Oberfläche der Membran adhärieren. In die andere Teilkammer wird eine Lösung mit einer bestimmten Chemikalie (beispielsweise C-AMP) eingefüllt. Durch die Poren der Membran diffundiert die Lösung aus der zweiten in die erste Teilkammer und bildet dort einen radialen Konzentrationsgradienten um die Pore. Die Reaktion der dort befindlichen Zellen auf den Konzentrationsgradienten kann dann untersucht werden. Für dieses Experiment weist die Membran vorzugsweise eine oder mehrere Poren mit vorbestimmtem Porendurchmesser und vorbestimmtem Lochabstand auf.

Für solche Chemotaxis-Untersuchungen kann eine Membran nur eine Pore bzw. ein Loch in der Größe von 1nm bis 30 µm aufweisen. In diesem Fall können auf einer Seite der Membran (z. B. unterhalb der Membran) Zellen in einem Haltemedium vorgesehen sein. Beispielsweise können Zellen in Agar oder Agarose eingebrachte sein. Statt Agar oder Agarose können auch andere Haltemedien verwendet werden. Die Haltemedien dienen u.a zur Verbesserung der optischen Analyse der Zelldynamik. Auf der anderen Seite der Membran (bspw. oberhalb der Membran) können ebenfalls in ein Haltemedium eingebettete Moleküle (Chemotaxine) vorgesehen sein. Dadurch muss für die Untersuchung keine Mikropipette mit einer Druckkontrolle verwendet werden, da die Konzentration der Chemotaxine, je nach Volumen des Haltemediums konstant bleibt, wenn die Chemotaxine durch das Loch diffundieren. Durch Diffusion dieser Chemotaxine von der ersten Seite der Membran durch das Loch auf die zweite Seite der Membran entsteht ein räumlich und zeitlich definierter Konzentrationsgradient auf der zweiten Seite der Membran. Somit kann untersucht werden, wie und ob die auf der zweiten Seite eingebetten Zellen auf den Konzentrationsgradienten reagieren. Die Membran ist vorzugsweise luftdurchlässig.

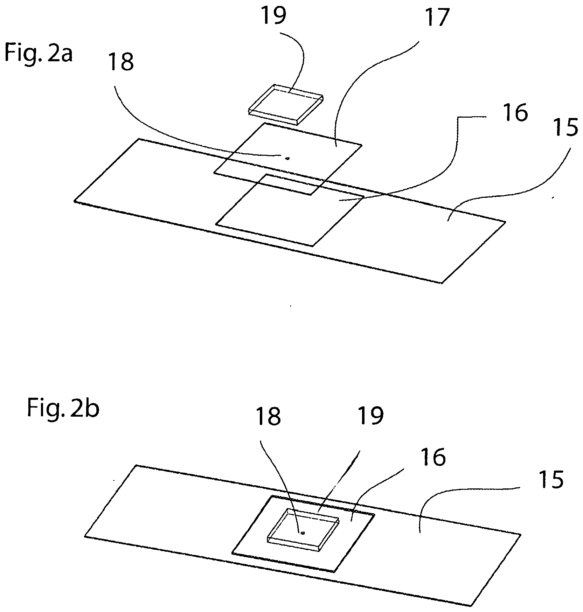

In Figuren 2a und 2b ist ein mögliches Beispiel einer entsprechenden Vorrichtung dargestellt. Grundsätzlich ist für diese Untersuchung keine Verwendung einer Flusskammer nötig. In Figur 2a ist ein entsprechender Aufbau in Explosionsansicht gezeigt. Auf einer Grundplatte 15 ist ein mit einem Haltemedium für Zellen (z.B. Agarose) benetzter Bereich aufgebracht. In diesem Bereich befinden sich auch die zu untersuchenden Zellen. Eine Membran 17 mit nur einem Loch 18 trennt diesen Bereich von dem mit Chemotaxinen angereicherten Haltemedium 19. Figur 2b zeigt den zusammengesetzten Analyseträger.

Solche Haltemedien können allerdings auch in einer Vorrichtung gemäß der Erfindung vorgesehen sein. Dazu können die Haltemedien jeweils in den Teilkammern, die durch die Membran getrennt sind, vorgesehen sein. Beispielsweise kann die Membran die Ober- und Unterseite von zwei in einem Substrat angeordneten Kanälen darstellen, analog zu dem in Fig. 1 gezeigten Beispiel. Alternativ können auch mehrere, typischerweise 2 - 96, durch Membranen mit einem Loch getrennte Reservoire als Töpfchen auf einem Träger oder durch einen Kanal in einem Träger vorgesehen sein.

Bei der vertikalen Chemotaxis wird die Migration von Zellen in einem chemischen Konzentrationsgradienten durch eine Membran untersucht. In einer typischen Anwendung kann beispielsweise ein homogener Zellrasen (Zelltyp A) auf einer porösen Membran gezüchtet werden. Durch die Erzeugung eines Konzentrationsgradienten (Befüllen der anderen Teilkammer mit einem Lösungsmittel) kann die Wanderung eines weiteren Zelltyps (Zelltyp B) durch den Zellrasen analysiert werden.

Die Konzentration des Zelltyps B in der zweiten Teilkammer kann beispielsweise durch Fluoreszenz-Techniken nachgewiesen werden. Weiterhin kann die Lösung im zweiten Kanal nach einer bestimmten Zeit entnommen und die Konzentration des Zelltyps B bestimmt werden. Untersuchungen von Leukozyten-Wanderungen durch verschiedene Zelllayer in Abhängigkeit von der Konzentration unterschiedlicher Substanzen und der Zelllayer können somit durchgeführt werden. In diesem Fall liegt der Porendurchmesser vorzugsweise bei 0,5 bis 20 µm.

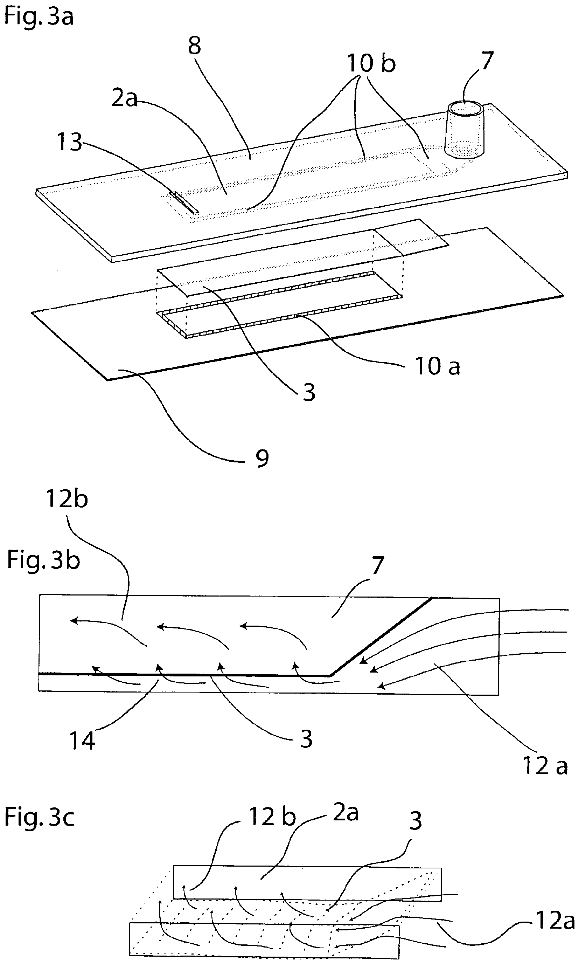

In Figur 3 ist ein weiteres Beispiel einer Vorrichtung für Mikrofluiduntersuchungen in Explosionsansicht gezeigt. Hier umfasst das Substrat eine Deckplatte 8 und eine Bodenfolie 9, die als Abdeckelement fungiert. In der Deckplatte 8 ist eine Ausnehmung 2a vorgesehen, welche die Kammer bildet.

In dem gezeigten Beispiel weist die Kammer nur zwei Zuführungen auf, wobei eine der Zuführungen in ein auf der Deckplatte angeordnetes Flüssigkeitsreservoir 7 mündet und die andere in die Auslassöffnung 13 mündet.

Weiterhin ist eine Membran 3 vorgesehen, die in dem Bereich 10a mit der Folie 9 und in dem Bereich 10b mit der Deckplatte 8 verklebt ist. Wie in der Figur zu sehen ist, wird die Membran 3 entlang ihres gesamten Randes mit der Deckplatte 8 verklebt, während die Membran an der dem Reservoir 7 zugewandten Seite nicht mit der Folie 9 verklebt ist. Dies bedeutet, dass eine durch das Reservoir 7 eintretende Flüssigkeit die Membran 3 passieren muss, bevor sie die Auslassöffnung 13 erreicht.

Solange keine Flüssigkeit über das Reservoir 7 in die Kammer gefüllt wird liegt die Membran zwischen den Klebebereichen flächig an der Folie 9 an.

Durch die Membran 3 wird die Kammer in zwei Teilkammern unterteilt, wobei die erste Teilkammer auf der Seite des Zuflusses und die zweite Teilkammer auf der Seite des Abflusses liegt. Die Membran ist mit der Deckplatte 8 derart verbunden, dass die gesamte Flüssigkeit, die durch das Flüssigkeitsreservoir 7 eingefüllt wird, durch die Membran strömen muss, um durch die Teilkammer 2a zum Auslass 13 zu gelangen. Durch das Befüllen über das Reservoir 7 wird die Membran von unten mit Druck beaufschlagt, löst sich von der Bodenfolie 9 und wird nach oben gedrückt. Vorzugsweise ist daher die Membran elastisch ausgebildet. Dies ist in Figur 3b in Seitenansicht und in Figur 3c in dreidimensionaler Ansicht gezeigt.

In den gezeigten Figuren ist die zu untersuchende Lösung vor dem Filtern durch die Membran mit 12a und nach dem Filtern mit 12b bezeichnet.

Wenn sich beispielsweise in der Lösung Bakterien finden, welche die Membran 3 nicht passieren können, lagern sie sich in dem Bereich 14 der Membran an. Die gefilterte Lösung kann durch den Auslass 13 entweichen. Nach dem Durchspülen mit Flüssigkeit legt sich die Membran 3 wieder an die Bodenfolie 9 und kann von unten mikroskopisch analysiert werden. Die Bakterien können beispielsweise mit FISH (Fluoreszenz-in-Situ Hybridisierung) angefärbt werden.

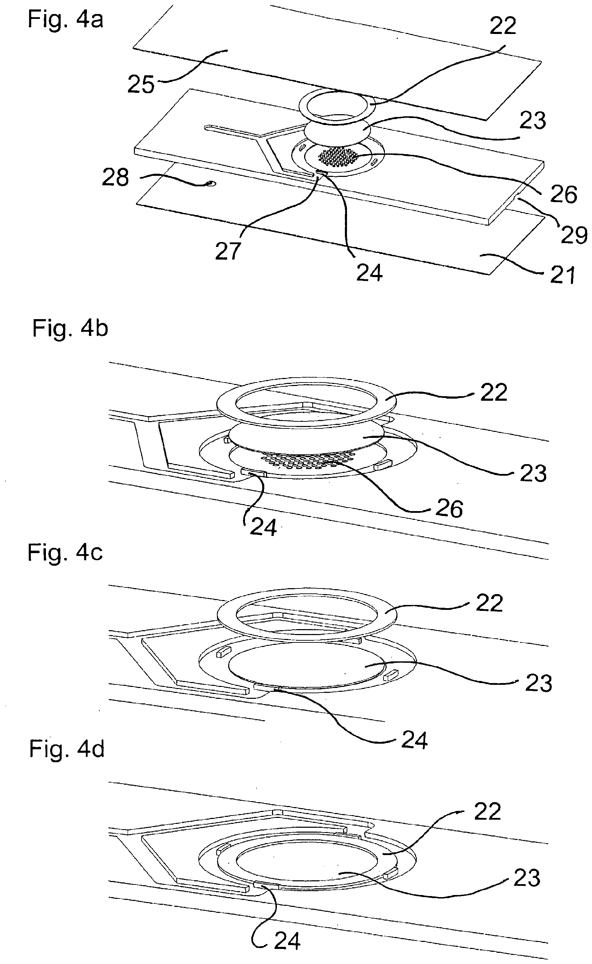

In Figur 4a - 4d ist eine Vorrichtung für Mikrofluiduntersuchungen in einer Explosionsansicht gezeigt, und wie die Membran in die Vorrichtung eingebaut wird. Die Vorrichtung umfasst eine Abdeckplatte 21 und eine Grundfläche 25, beides in Form einer Kunststofffolie, sowie einen Ring 22 zur Erzeugung einer Nut, in der die Seitenränder der Membran 23 mit Hilfe von Positioniereinrichtungen 24 eingebaut wurden. Das Gitter 26 befindet sich zwischen der Membran und der Abdeckplatte. Ferner ist ein ringförmige Zuführung 27 dargestellt, die dem gleichmäßigen Befüllen der Kammer dient, sowie einen Zulauf 28 der zweiten Teilkammer und einen Ablauf 29 der ersten Teilkammer.

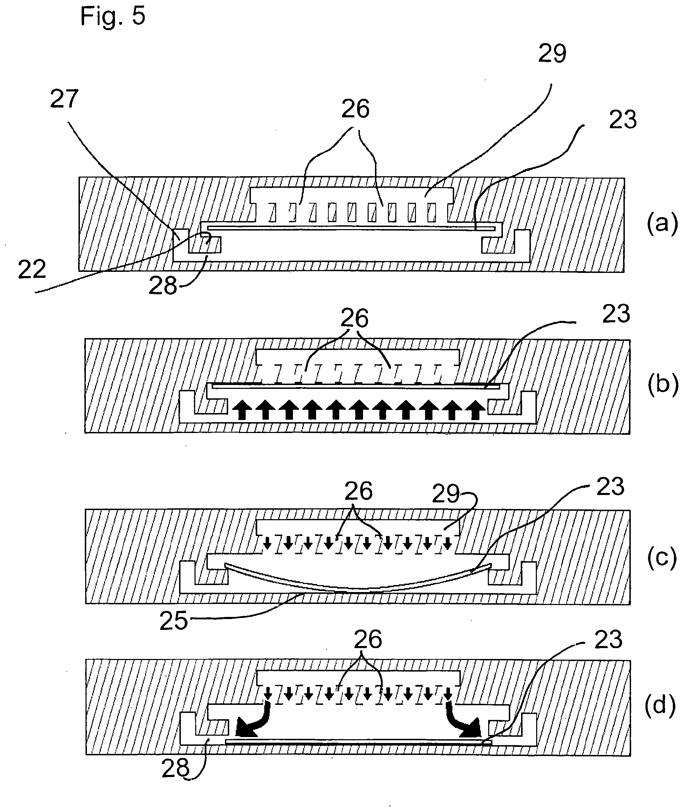

In Figuren 5a bis 5d ist eine Seitenansicht der Vorrichtung aus Figur 4 dargestellt.

Figur 5a zeigt die Seitenränder der Membran 23 in der durch den Ring 22 erzeugten Nut unter dem Gitter liegend. Der Ablauf 29 der ersten Teilkammer befindet sich oben, der Zulauf 28 der zweiten Teilkammer befindet sich unten in Form des ringförmigen Kanals 27.

In Figur 5b strömt aus dem Zulauf 28 ein Fluid in Pfeilrichtung gegen die Unterseite der Membran 23 und drückt diese gegen das Gitter 26. Die zu untersuchenden Partikel befinden sich in diesem Moment and der Unterseite der Membran, während der Rest des Fluids durch die Membran und das Gitter Richtung Ablauf 29 strömt.

Figur 5c stellt den Rückfluss dar, wie ein Fluid von dem Ablauf 29 aus durch das Gitter 26 auf die Membran 23 trifft. Die Membran beult sich durch den Druckstoß in Richtung Grundfläche 25 nach unten, liegt aber noch mit ihren Rändern in der Nut fest.

In Figur 5d liegt die Membran 23 aus Figur 5c durch den kurzen Rückfluss bereits vollständig an der Grundfläche 25 an, so dass nun das Rückflussfluid an den Membranrändern vorbei durch den Zulauf 28 abfließen kann.

Liegt, wie in Figur 5d beschrieben, die Membran 23 vollständig plan an der Grundfläche 25, kann die Membranunterseite mit den gefilterten Partikeln hochauflösend mikroskopiert werden, vorzugsweise mit einem Schärfentiefebereich von 0,5 - 200 µm.

Handelt es sich bei der zu analysierenden Flüssigkeit um Blut, Schlamm oder andere Proben, bei denen die Bakterien von anderen festen Bestandteilen getrennt werden müssen, kann die Oberfläche der Membran so modifiziert bzw. funktionalisiert sein, dass die Bakterien daran adhärieren. Vorzugsweise ist dann allerdings für die untere Teilkammer eine zusätzliche Auslassöffnung vorgesehen, die verschließbar ist. Durch diese Auslassöffnung kann dann der untere Kanal gespült werden, um die genannten anderen festen Bestandteile zu entfernen.

Vorzugsweise weist die Membran bei der erfindungsgemäßen Vorrichtung eine große Fläche auf, um ein schnelles Durchspülen zu ermöglichen. In diesem Fall ist allerdings auch der zu mikroskopierende Bereich der Membran (Analysefläche) verhältnismäßig groß. Aus diesem Grund kann die erfindungsgemäße Vorrichtung, insbesondere die Beispiele in den Figuren, eine weitere Kammer aufweisen. Dabei werden dann die zu untersuchenden Teilchen, wie zuvor beschrieben, an der ersten Membran gefiltert und anschließend durch einen Rückspülvorgang, bei dem ein Fluss in entgegengesetzter Richtung angelegt wird, in einem weiteren Filter (Analysefilter) aufgefangen. Dieser hat vorzugsweise eine geringere Fläche und kann somit einfacher mikroskopisch betrachtet werden.

Die weitere Kammer ist vorzugsweise über eine verschließbare Öffnung (beispielsweise mit einem Ventil) mit der entsprechenden Teilkammer verbunden, so dass erst nach Öffnen der verschließbaren Öffnung (zum Beispiel durch Beaufschlagen des Ventils mit einem vorbestimmten Druck durch den Rückspülvorgang), die Flüssigkeit, dann nur noch die tatsächlich zu untersuchenden Partikeln enthält, in die weitere Kammer gespült wird. Diese Bakterien werden dann an der zusätzlichen Analysemembran gefiltert und können dort mikroskopisch untersucht werden. Alternativ kann die Analysemembran in einen Deckel integriert sein, mit dem die Zuflussöffnung verschlossen werden kann.

Bei Ausführungsformen, die zwei Zuführungen für eine Teilkammer umfassen, wie beispielsweise in Figur 1 gezeigt ist, kann die Flüssigkeitszufuhr in eine Teilkammer durch die beiden Zuführungen gleichzeitig erfolgen. In diesem Fall sammeln sich die gefilterten Partikel hauptsächlich an dem Bereich der Membran, der in der Mitte zwischen den beiden Zuführungen liegt. An dieser Stelle kann dann eine Analyse der Partikel vorgenommen werden.

Für die verschiedene Anwendungen können die Oberflächen der Membran und/oder der Kammer funktionalisiert sein. Beispielsweise kann ein verbessertes Zellwachstum auf der Membran oder auf einer der Kammerinnenseiten bzw. -wände durch eine entsprechende Behandlung der Oberfläche erreicht werden. Insbesondere kann eine Beschichtung mit Polyelektrolytfilmen erfolgen, die typische Dicken im Bereich von 5 nm bis 100 nm haben. Die Beschichtungen können aus unterschiedlichen Polyelektrolytfilmen wie PAA, PEI und PSS bestehen. Insbesondere kann jeweils eine Basisschicht aus einem dieser Materialien bestehen. Auf diese Schichten können direkt Biomoleküle wie Proteine oder DNA aufgebracht werden. Eine solche nicht-kovalente Bindung ist auch bei Anlegen eines Flusses im Kanal stabil.

Auch unspezifische oder spezifische Adhäsionsfaktoren für Moleküle oder Zellen (z.B. RGD-Peptide) können in dem Schichtaufbau, insbesondere in der zuletzt aufgebrachten Schicht, aufgebracht werden. Die zuletzt aufgebrachte Schicht kann funktionelle Gruppen wie COOH oder NH₂ enthalten. Diese können zum kovalenten Koppeln von Biomolekülen verwendet werden.

Nach dem Binden von Biomolekülen auf die oberste Polyelektrolytschicht kann eine weitere Schicht zum Blocken unspezifischer Bindungen aufgebracht werden. Dabei kann es sich um eine weitere Polyelektrolytschicht, eine Lipidmembran oder um ein Blockingmolekül wie BSA, Gelatine oder DNA handeln. Das aufgebrachte Biomolekül sollte dabei seine Bindungsfähigkeit erhalten.

Weiterhin können auch strukturierte Polyelektrolytschichten vorgesehen werden. Dies kann beispielsweise durch das Spotten von Polyelektrolytschichten erfolgen, was es dann ermöglicht, Biomoleküle oder Zellen an speziellen Bereichen der Kammer oder der Membran zu binden.

Zusätzlich können unterschiedliche Bereiche oder die verschiedenen Teilkammern mit unterschiedlichen Polyelektrolytschichten verwendet werden.

Ein Beschichten kann beispielsweise durch Lösen eines Polyelektrolyts in wässriger Lösung (ca. 0,1 mg/ml bis 10 mg/ml) bei neutralem pH erfolgen. Diese Lösung wird dann in die Kammer eingespült und dort über einen vorbestimmten Zeitraum (beispielsweise 10 Minuten bis 2 Stunden) bei Raumtemperatur inkubiert. Auf diese Weise können zwischen einer und zwanzig Schichten aufgebracht werden.

## Patentansprüche

1. Vorrichtung für Mikrofluiduntersuchungen mit einem Substrat mit planer Grundfläche und Deckfläche, wobei
in das Substrat eine Kammer zur Flüssigkeitsaufnahme mit wenigstens zwei Zuführungen integriert ist und
in der Kammer eine halbdurchlässige oder durchlässige Membran (3; 23) angeordnet ist, wobei die Kammer durch die Membran in zwei Teilkammern (2a; 2b) mit jeweils wenigstens einer Zuführung unterteilt wird,
wobei das Substrat ein Deckenelement umfasst, in dessen Grundfläche eine Ausnehmung für die Kammer vorgesehen ist wobei das Deckenelement eine Deckplatte (8) ist oder aus einer Zwischenplatte (4), in welcher ein Durchbruch (2b) für die Kammer vorgesehen ist, und einer Abdeckplatte (1), welche zum Abdecken des Durchbruchs auf einer Seite der Zwischenplatte vorgesehen ist, besteht,
wobei die Zuführungen in die Deckfläche des Deckenelements des Substrats münden,
wobei das Substrat ein Abdeckelement in Form einer Kunststofffolie mit einer Dicke von 50 µm bis 1 mm zum Abdecken der Ausnehmung umfasst, wobei die Grundfläche des Substrats aus der mit dem Deckenelement verbundenen Kunststofffolie besteht,
wobei weiterhin wenigstens ein Flüssigkeitsreservoir (7) vorgesehen ist, welches auf dem Deckenelement des Substrats angeordnet ist und in welches eine Zuführung mündet, wobei das wenigstens eine Flüssigkeitsreservoir und das Deckenelement im Bereich der Zuführungsmündung als ein Stück aus einem Kunststoff ausgebildet sind.

2. Vorrichtung nach Anspruch 1, wobei die Teilkammern wenigstens teilweise parallel zueinander angeordnet sind.

3. Vorrichtung nach Anspruch 1 oder 2, wobei die Teilkammern in einer Ebene parallel oder senkrecht zur Grundfläche des Substrats angeordnet sind.

4. Vorrichtung nach einem der vorangegangenen Ansprüche, wobei die Membran wenigstens teilweise in einer Ebene parallel oder senkrecht zur Grundfläche des Substrats angeordnet ist.

5. Vorrichtung nach einem der vorangegangenen Ansprüche, wobei die Membran flexibel, vorzugsweise elastisch, ist.

6. Vorrichtung nach einem der vorangegangenen Ansprüche, wobei die erste Teilkammer ein Gitter (26) umfasst.

7. Vorrichtung nach Anspruch 6, wobei die Membran so angeordnet ist, dass sie bei einem Fluidstrom von der zweiten in die erste Teilkammer teilweise oder vollständig an das Gitter gedrückt wird.

8. Vorrichtung nach Anspruch 7, wobei die Membran fest zwischen erster und zweiter Teilkammer vorgesehen ist.

9. Vorrichtung nach Anspruch 7, wobei die Membran lose zwischen erster und zweiter Teilkammer angeordnet ist.

10. Vorrichtung nach Anspruch 9, wobei ein Mittel (22) vorgesehen ist, welches die Membran so positioniert, dass sie teilweise oder vollständig in dem Fluidstrom liegt.

11. Vorrichtung nach einem der Ansprüche 6, 7, 9 oder 10, wobei die Membran so angeordnet ist, dass sie bei einem Fluidstrom von der ersten Teilkammer in die zweite Teilkammer teilweise oder vollständig gegen die Grundfläche gedrückt wird.

12. Vorrichtung nach einem der Ansprüche 1 - 7, wobei die Membran wenigstens teilweise mit dem Boden der Kammer verbunden ist.

13. Vorrichtung nach einem der vorangegangenen Ansprüche, wobei das Substrat zusätzlich Positioniereinrichtungen (24) für die Membran umfasst.

14. Vorrichtung nach einem der Ansprüche 1 - 7, wobei wenigstens ein Teil der Membran an einem Teil der Kammerwand, insbesondere dem Boden der Kammer, flächig anliegend lösbar angeordnet ist.

15. Vorrichtung nach einem der vorangegangenen Ansprüche, wobei die Membran wenigstens eine Pore aufweist, wobei jede Pore einen Porendurchmesser in einem vorbestimmten Teilbereich des Bereichs von 1 nm - 20 µm, vorzugsweise 0,5 µm - 20 µm, aufweist.

16. Vorrichtung nach einem der vorangegangenen Ansprüche, wobei die Kammer wenigstens vier Zuführungen umfasst und durch die Membran in zwei Teilkammern mit jeweils wenigstens zwei Zuführungen unterteilt wird.

17. Vorrichtung nach einem der vorangegangenen Ansprüche, wobei wenigstens eine Zuführung (28; 29) ringförmig um die Kammer verläuft.

18. Vorrichtung nach einem der vorangegangen Ansprüche, wobei die Membran zwischen der Abdeckplatte und der Zwischenplatte angeordnet ist.

19. Vorrichtung nach einem der vorangegangenen Ansprüche, wobei die Kunststofffolie aus einem optisch hochwertigen Kunststoff ist.

20. Vorrichtung nach einem der vorangegangenen Ansprüche, wobei das Flüssigkeitsreservoir und das Deckenelement im Bereich der Zuführungsmündung als ein Stück, vorzugsweise einem Spritzgussteil, ausgebildet sind.

21. Vorrichtung nach einem der vorangegangenen Ansprüche, mit einer weiteren Kammer, welche mit einer der Teilkammern über eine verschließbare Öffnung verbunden ist, und mit einer weiteren Zuführung, wobei in der weiteren Kammer eine weitere Membran angeordnet ist, durch welche die weitere Kammer zwischen der verschließbaren Öffnung und der weiteren Zuführung in zwei Teilkammern unterteilt ist.

22. Vorrichtung nach einem der vorangegangenen Ansprüche, wobei die Grund- und/oder Deckelfläche und/oder Membran aus einem optisch hochwertigen Material besteht, welches eine so geringe oder eine geringere Autofluoreszenz aufweist als COC oder COP.

## Claims

1. Device for microfluid analyses with a substrate with plane base and cover surfaces, wherein
a chamber for receiving liquid comprising at least two admissions is integrated in the substrate, and
in the chamber a semipermeable or permeable membrane (3; 23) is arranged, the chamber being subdivided into two sectional chambers (2a; 2b) with at least one admission each by the membrane,
wherein the substrate comprises a covering element, in the base surface of which a recess for the chamber is provided, wherein the covering element comprises an intermediate plate (4) in which an opening (2b) for the chamber is provided, and a cover plate (1) which is provided for covering the opening on one side of the intermediate plate,
wherein the admissions end in the cover surface of the covering element of the substrate,
wherein the substrate comprises a cover element in form of a plastic foil with a thickness of 50 µm to 1 mm for covering the recess, wherein the base surface of the substrate consists of the plastic foil connected to the covering element,
wherein furthermore at least one liquid reservoir (7) is provided which is arranged on the covering element of the substrate and in which an admission ends, wherein the at least one liquid reservoir and the covering element in the area of the admission port are formed in one piece from a plastics.

2. Device according to claim 1, wherein the sectional chambers are at least partially arranged in parallel one to another.

3. Device according to claim 1 or 2, wherein the sectional chambers are arranged in a plane in parallel or perpendicularly to the base surface of the substrate.

4. Device according to one of the preceding claims, wherein the membrane is arranged at least partially in a plane in parallel or perpendicularly to the base surface of the substrate.

5. Device according to one of the preceding claims, wherein the membrane is flexible, preferably elastic.

6. Device according to one of the preceding claims, wherein the first sectional chamber comprises a grid (26).

7. Device according to claim 6, wherein the membrane is arranged such that in case of a fluid flow from the second into the first sectional chamber it is partially or completely pressed against the grid.

8. Device according to claim 7, wherein the membrane is firmly provided between the first and the second sectional chambers.

9. Device according to claim 7, wherein the membrane is loosely arranged between the first and the second sectional chambers.

10. Device according to claim 9, wherein means (22) are provided which position the membrane such that it is partially or completely in the fluid flow.

11. Device according to one of claims 6, 7, 9 or 10, wherein the membrane is arranged such that it is partially or completely pressed against the base surface in case of a fluid flow from the first sectional chamber into the second sectional chamber.

12. Device according to one of claims 1 - 7, wherein the membrane is at least partially connected to the bottom of the chamber.

13. Device according to one of the preceding claims, wherein the substrate additionally comprises positioning means (24) for the membrane.

14. Device according to one of claims 1-7, wherein at least a part of the membrane is detachably arranged at a part of the chamber wall, in particular the bottom of the chamber, so as to planely lie against it.

15. Device according to one of the preceding claims, wherein the membrane comprises at least one pore, each pore having a pore diameter in a predetermined partial area of the area of 1 nm - 20 µm, preferably 0.5 µm - 20 µm.

16. Device according to one of the preceding claims, wherein the chamber comprises at least four admissions, and the membrane subdivides the chamber into two sectional chambers with at least two admissions each.

17. Device according to one of the preceding claims, wherein at least one admission (28; 29) annularly surrounds the chamber.

18. Device according to one of the preceding claims, wherein the membrane is arranged between the cover plate and the intermediate plate.

19. Device according to one of the preceding claims, wherein the plastic foil is of optically high-grade plastics.

20. Device according to one of the preceding claims, wherein the liquid reservoir and the covering element are formed in one piece in the area of the admission port, in particular wherein the one piece is a molded part.

21. Device according to one of the preceding claims with a further chamber which is connected to one of the sectional chambers via a closable opening, and with a further admission, wherein in the further chamber a further membrane is arranged by which the further chamber is subdivided into two sectional chambers between the closable opening and the further admission.

22. Device according to one of the preceding claims, wherein the base and/or cover surface and/or membrane consists of an optically high-grade material which has autofluorescence as low as or lower than COC or COP.

## Revendications

1. Dispositif pour effectuer des analyses de fluide microscopiques comprenant un substrat avec une surface de base et une surface de couverture planes, dispositif dans lequel
à l'intérieur du substrat est intégrée une chambre destinée à accueillir le fluide comprenant au moins deux amenées d'alimentation, et
dans la chambre est agencée une membrane (3 ; 23) semi-perméable ou perméable, la chambre étant ainsi subdivisée par la membrane, en deux chambres partielles (2a; 2b) avec chacune au moins une amenée d'alimentation,
dans lequel le substrat comprend un élément de couverture dans la surface de base duquel est prévu un évidement pour la chambre, l'élément de couverture étant une plaque de couverture (8), ou bien étant constitué d'une plaque intermédiaire (4) dans laquelle est prévu un passage (2b) pour la chambre, et d'une plaque de recouvrement (1), qui est prévue pour recouvrir le passage sur un côté de la plaque intermédiaire,
dans lequel les amenées débouchent dans la surface de couverture de l'élément de couverture du substrat,
dans lequel le substrat comprend un élément de recouvrement sous la forme d'une feuille de matière plastique d'une épaisseur de 50 µm à 1 mm, pour recouvrir l'évidement, la surface de base du substrat étant constituée par la feuille de matière plastique reliée à l'élément de couverture,
et dans lequel par ailleurs, il est prévu au moins un réservoir de liquide (7), qui est agencé sur l'élément de couverture du substrat et dans lequel débouche au moins une amenée d'alimentation, ledit au moins un réservoir de liquide et l'élément de couverture étant réalisés, dans la zone de l'embouchure de l'amenée d'alimentation, sous la forme d'une pièce en une matière plastique.

2. Dispositif selon la revendication 1, dans lequel les chambres partielles sont agencées en partie parallèlement l'une à l'autre.

3. Dispositif selon la revendication 1 ou la revendication 2, dans lequel les chambres partielles sont agencées dans un plan parallèlement ou perpendiculairement à la surface de base du substrat.

4. Dispositif selon l'une des revendications précédentes, dans lequel la membrane est agencée au moins en partie dans un plan parallèlement ou perpendiculairement à la surface de base du substrat.

5. Dispositif selon l'une des revendications précédentes, dans lequel la membrane est flexible, de préférence élastique.

6. Dispositif selon l'une des revendications précédentes, dans lequel la première chambre partielle comporte une grille (26).

7. Dispositif selon la revendication 6, dans lequel la membrane est agencée de manière telle, que dans le cas d'un écoulement de fluide de la deuxième à la première chambre partielle, elle soit pressée en partie ou totalement contre la grille.

8. Dispositif selon la revendication 7, dans lequel la membrane est prévue de manière fixe entre la première et la deuxième chambre partielle.

9. Dispositif selon la revendication 7, dans lequel la membrane est agencée de manière flottante entre la première et la deuxième chambre partielle.

10. Dispositif selon la revendication 9, dans lequel il est prévu un moyen (22), qui positionne la membrane pour qu'elle se situe en partie ou en totalité dans l'écoulement de fluide.

11. Dispositif selon l'une des revendications 6, 7, 9 ou 10, dans lequel la membrane est agencée de manière telle, que dans le cas d'un écoulement de fluide de la première chambre partielle à la deuxième chambre partielle, elle soit pressée en partie ou en totalité contre la surface de base.

12. Dispositif selon l'une des revendications 1 - 7, dans lequel la membrane est reliée au moins en partie au fond de la chambre.

13. Dispositif selon l'une des revendications précédentes, dans lequel le substrat comporte en supplément, des dispositifs de positionnement (24) pour la membrane.

14. Dispositif selon l'une des revendications 1 - 7, dans lequel au moins une partie de la membrane est agencée de manière amovible sur une partie de la paroi de chambre, notamment le fond de la chambre, en s'y appliquant à plat.

15. Dispositif selon l'une des revendications précédentes, dans lequel la membrane présente au moins un pore, chaque pore présentant un diamètre de pore dans une plage partielle prédéterminée de 1 nm - 20 µm, de préférence 0,5 µm - 20 µm.

16. Dispositif selon l'une des revendications précédentes, dans lequel la chambre comporte au moins quatre amenées d'alimentation et est subdivisée par la membrane en deux chambres partielles avec chacune au moins deux amenées d'alimentation.

17. Dispositif selon l'une des revendications précédentes, dans lequel au moins une amenée d'alimentation (28 ; 29) s'étend de manière annulaire autour de la chambre.

18. Dispositif selon l'une des revendications précédentes, dans lequel la membrane est agencée entre la plaque de recouvrement et la plaque intermédiaire.

19. Dispositif selon l'une des revendications précédentes, dans lequel la feuille de matière plastique est en une matière plastique de haute qualité optique.

20. Dispositif selon l'une des revendications précédentes, dans lequel le réservoir de liquide et l'élément de couverture sont réalisés en une seule pièce dans la zone de l'embouchure d'amenée, de préférence en une pièce moulée par injection.

21. Dispositif selon l'une des revendications précédentes, comprenant une autre chambre, qui est reliée à l'une des chambres partielles par l'intermédiaire d'une ouverture pouvant être fermée, et qui comporte une autre amenée d'alimentation, dispositif dans lequel à l'intérieur de ladite autre chambre est agencée une autre membrane par laquelle ladite autre chambre est subdivisée en deux chambres partielles entre l'ouverture pouvant être fermée et ladite autre amenée d'alimentation.

22. Dispositif selon l'une des revendications précédentes, dans lequel la surface de base et/ou de couverture et/ou la membrane sont réalisées en un matériau de haute qualité optique, qui présente une auto-fluorescence si faible ou plus faible que des COC (copolymères d'oléfines cycliques) ou des COP (polymères d'oléfines cycliques).
